**Europäisches Patentamt**

**European Patent Office**

**Office européen des brevets**

(19)

(11) Numéro de publication: **0 253 736**
**B1**

(12) **FASCICULE DE BREVET EUROPEEN**

(45) Date de publication du fascicule du brevet:
07.03.90

(21) Numéro de dépôt: **87401666.0**

(22) Date de dépôt: **16.07.87**

(51) Int. Cl.⁴: **F16B 5/12**
// B60R13/04

(54) **Agrafe de bandeau.**

(30) Priorité: **17.07.86 FR 8610643**

(43) Date de publication de la demande:
**20.01.88 Bulletin 88/3**

(45) Mention de la délivrance du brevet:
**07.03.90 Bulletin 90/10**

(84) Etats contractants désignés:
**DE GB IT**

(56) Documents cités:
**AU-B- 451 346**
**FR-A- 1 392 075**
**US-A- 4 099 274**

(73) Titulaire: **AUTOMOBILES PEUGEOT, 75, avenue de la
Grande Armée, F-75116 Paris(FR)**
Titulaire: **AUTOMOBILES CITROEN, 62 Boulevard
Victor-Hugo, F-92200 Neuilly-sur-Seine(FR)**

(72) Inventeur: **Raffray, Jacques, 9, Villa Marguerite,
F-92160 Antony(FR)**

(74) Mandataire: **Boivin, Claude, 9, rue Edouard-Charton,
F-78000 Versailles(FR)**

ACTORUM AG

## Description

La présente invention concerne une pièce extérieure d'enjolivement creuse, par exemple un bandeau, avec un dispositif destiné à assurer la fixation à l'aide d'une ou plusieurs agrafes sur un élément de carrosserie tel qu'un panneau, sans qu'aucun moyen de fixation ne soit visible de l'extérieur, les moyens de fixation étant cachés par le bandeau.

L'ensemble selon l'invention est caractérisé en ce que la pièce d'enjolivement comporte au moins une patte intérieure venue de matière et en ce que la ou chaque agrafe comporte d'une part une fente à deux largeurs, la partie la plus large permettant l'introduction de la patte dans l'agrafe et d'autre part des moyens pour la fixer sur la partie du panneau cachée par la pièce d'enjolivement, dans la position dans laquelle la patte est disposée dans la partie la plus étroite de la fente.

Pour fixer la pièce d'enjolivement au panneau, on commence par fixer au moins une agrafe à l'intérieur de la pièce d'enjolivement en introduisant sa ou ses pattes dans la partie la plus large de la fente et en déplaçant ensuite l'agrafe par rapport à l'élément d'enjolivement de façon que les pattes se trouvent en regard de la partie étroite de cette fente et ne peuvent ainsi ressortir de l'agrafe; il ne reste plus qu'à fixer l'agrafe au panneau. Les divers moyens de fixation sont alors cachés par l'élément d'enjolivement.

Dans un mode de réalisation avantageux de l'invention, l'agrafe présente la forme d'un cylindre coupé par un plan parallèle aux génératrices, la fente à deux largeurs étant ménagée dans la partie cylindrique de l'agrafe et ayant son axe de symétrie disposé dans un plan perpendiculaire aux génératrices du cylindre.

Dans ce cas, les pattes de la pièce d'enjolivement ont de préférence un profil interne cylindrique, avec le même rayon de courbure que la face interne de la partie cylindrique de l'agrafe.

Les moyens de fixation de l'agrafe sur le panneau peuvent être constitués par un bossage intérieur comportant un perçage taraudé.

On a décrit ci-après, à titre d'exemple non limitatif, un mode de réalisation du dispositif de fixation selon l'invention, avec référence aux dessins annexés dans lesquels :

La Figure 1 est une vue en perspective montrant l'ensemble du bandeau et de l'agrafe;
La Figure 2 est une vue en coupe transversale par II-II de la Figure 1;
Les Figures 3 et 4 sont des vues en plan et par dessus de l'agrafe;
La Figure 5 est une vue en perspective de détail de l'agrafe montée sur le bandeau.

Au dessin, on voit une agrafe qui est désignée d'une façon générale par la référence 1, et est destinée à assurer la fixation sur un panneau 2, par exemple vertical, d'un bandeau 3 qui a une section approximativement en U, la face ouverte de ce bandeau étant appliquée sur le panneau.

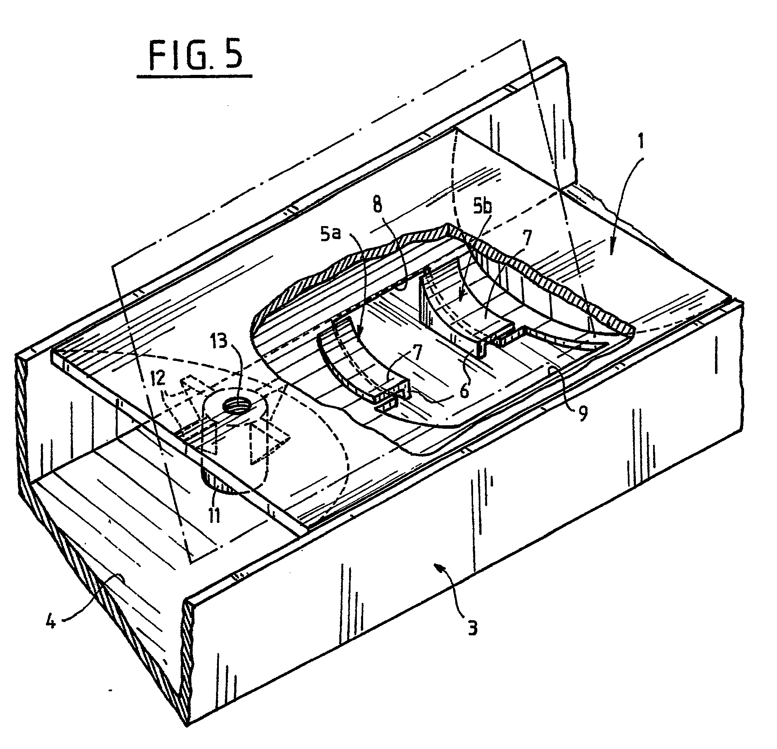

Le bandeau 3 comporte sur sa face 4 opposée à sa face ouverte, une ou plusieurs paires de pattes intérieures 5ª et 5b de section en équerre. Chacune de ces pattes présente une aile plane 6 perpendiculaire à la face 4 et une aile 7 perpendiculaire à l'aile 6, ayant un profil interne cylindrique, et orientée de manière à aller en s'écartant de l'aile 7 de l'autre patte (voir Figure 5).

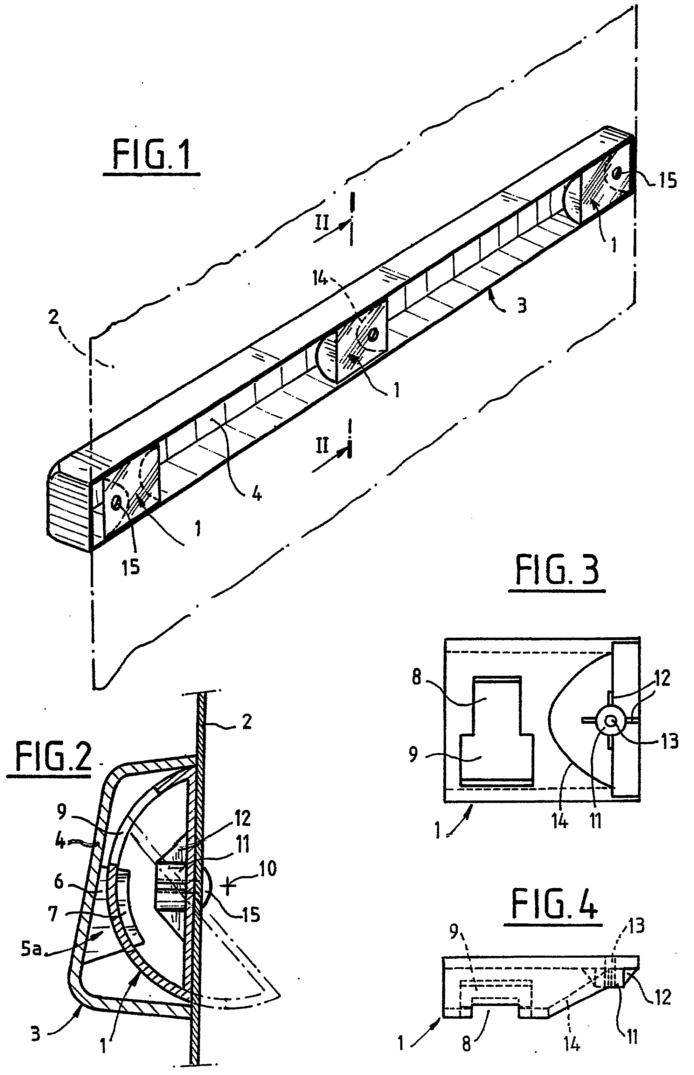

L'agrafe 1 a la forme d'un cylindre couplé par un plan parallèle aux génératrices du cylindre. Sa partie cylindrique dont la face interne a même rayon de courbure que le profil interne des ailes 7 des pattes, comporte une fente à deux largeurs, ayant son axe de symétrie disposé dans un plan perpendiculaire aux génératrices du cylindre; cette fente comprend une partie étroite 8 et une partie large 9. La largeur de cette partie large 9 est au moins égale à la largeur d'une paire de pattes 5ª et 5b du bandeau 3 alors que celle de la partie étroite 8 est sensiblement égale à l'écart entre les faces externes des ailes 6 des pattes. On peut ainsi engager les deux pattes du bandeau dans la fente 8-9 et en faisant pivoter l'agrafe 1 autour de l'axe 10 de sa partie cylindrique verrouiller l'agrafe au panneau, dans une position dans laquelle sa face plane coïncide avec le plan de la face ouverte du bandeau 3, comme le montre la Figure 1. Dans cette position, l'agrafe est immobilisée axialement par rapport au bandeau par la butée des ailes 6 des pattes contre les bords de la partie étroite 8 de la fente.

La face plane de l'agrafe 1 comporte un bossage interne 11 renforcé par des nervures 12 et muni d'un trou taraudé 13. L'agrafe est coupée symétriquement par un plan oblique qui dégage l'extrémité du bossage 11 et dont l'intersection avec la partie cylindrique de l'agrafe a la forme d'une ellipse 14.

Pour fixer le bandeau 3 au panneau 2, on fixe au bandeau des agrafes 1 en nombre égal à celui des paires de pattes 5ª-5b en engageant chaque paire de pattes dans la partie large 9 de la fente de l'agrafe et en faisant ensuite basculer l'agrafe. Il ne reste plus qu'à fixer l'ensemble au panneau 2, à l'aide de vis 15 vissées dans les taraudages 13 des bossages 11 à partir de la face cachée du panneau.

La présente invention couvre par exemple une variante selon laquelle la fixation sur le panneau de l'ensemble formé par le bandeau et les agrafes se fait par clipsage sur des pions soudés.

## Revendications

1. Pièce d'enjolivement (3), par exemple un bandeau, avec dispositif de sa fixation à l'aide d'une ou plusieurs agrafes (1) sur un élément de carrosserie (2) tel qu'un panneau, caractérisé en ce que la pièce d'enjolivement (3) comporte au moins une patte intérieure (5ª ou 5b) venue de matière, et en ce que la ou chaque agrafe (1) comporte d'une part une fente à deux largeurs (8-9), la partie la plus large (9) permettant l'introduction de la patte dans l'agrafe et d'autre part des moyens (11-13) pour la fixer sur la partie du panneau (2), cachée par la pièce d'enjolivement (3), dans la position dans laquelle la patte est disposée dans la partie la plus étroite (8) de la fente.

2. Ensemble selon la revendication 1, caractérisé en ce que la pièce d'enjolivement comporte au moins une paire de pattes intérieurs (5ª-5b̠) de section en équerre, les ailes extérieures (7) de ces pattes étant dirigées en sens opposé de manière à s'écarter l'une de l'autre et en ce que la partie la plus large (9) de la fente a une largeur au moins égale à celle de la paire de pattes alors que sa partie la plus étroite (8) a une largeur sensiblement égale à l'écart entre les ailes internes (6) des pattes.

3. Ensemble selon la revendication 1 ou 2, caractérisé en ce que l'agrafe (1) présente la forme d'un cylindre coupé par un plan parallèle aux génératrices, la fente à deux largeurs (8-9) étant ménagée dans la partie cylindrique de l'agrafe et ayant son axe de symétrie disposé dans un plan perpendiculaire aux génératrices du cylindre.

4. Ensemble selon la revendication 3, caractérisé en ce que la patte (5ª ou 5b̠) de la pièce d'enjolivement (3) a une section en équerre et en ce que son aile extérieure a un profil interne cylindrique, avec le même rayon de courbure que la face interne de la partie cylindrique de l'agrafe (1).

5. Ensemble selon la revendication 3 ou 4, caractérisé en ce que la fente (8-9) est disposée de manière que, lorsque la patte (5ª ou 5b̠) est engagée dans sa partie (8) la plus étroite, sa face plane est en position de fixation sur l'élément de carrosserie.

6. Ensemble selon l'une des revendications 1 à 5, caractérisé en ce que les moyens de fixation de l'agrafe (1) sur le panneau (2) sont constitués par un bossage intérieur (11) comportant un perçage taraudé (13).

7. Ensemble selon les revendications 3 et 6, caractérisé en ce que la partie cylindrique de l'agrafe (1) est coupée symétriquement par un plan oblique dégageant l'extrémité du bossage (11).


**Patentansprüche**

1. Zierbauteil, beispielsweise Zierleiste, mit einer Vorrichtung zu seiner Befestigung an einem Karosserieelement (2), wie z.B. einer Platte mittels einer oder mehrerer Klammern (1), dadurch gekennzeichnet, daß das Zierbauteil (3) mindestens eine einstückig mit ihm verbundene innere Klaue (5a̠ oder 5b̠) aufweist und daß die oder jede Klammer (1) einerseits einen Schlitz (8-9) mit zwei Weiten, wobei der breiteste Teil (9) die Einführung der Klaue in die Klammer zuläßt, und andererseits Mittel (11-13) zu ihrer Befestigung an den, durch das Zierbauteil (3) verdeckten Teil der Platte (2) in der Position, in welcher die Klaue in dem engsten Teil (8) des Schlitzes angeordnet ist, aufweist.

2. Baueinheit nach Anspruch 1, dadurch gekennzeichnet, daß das Zierbauteil mindestes ein Paar innerer Klauen (5a̠-5b̠) mit Winkelquerschnitt aufweist, wobei die äußeren Flügel (7) dieser Klauen in einander entgegengesetzter Richtung ausgerichtet sind derart, daß sie sich voneinander entfernen und daß der breiteste Teil (9) des Schlitzes eine Breite besitzt, die mindestens gleich der Breite des Klauenpaars ist, während sein engster Teil (8) eine Breite besitzt, die im wesentlichen gleich dem Abstand zwischen den inneren Flügeln (6) der Klauen ist.

3. Baueinheit nach Anspruch 1 oder 2, dadurch gekennzeichnet, daß die Klammer (1) die Form eines Zylinders besitzt, der von einer parallel zu den Mantellinien verlaufenden Ebene geschnitten ist und der Schlitz (8-9) mit zwei Weiten im zylindrischen Teil der Klammer ausgespart ist und seine Symmetrieachse in einer Ebene senkrecht zu den Mantellinien des Zylinders angeordnet ist.

4. Baueinheit nach Anspruch 3, dadurch gekennzeichnet, daß die Klaue (5a̠ oder 5b̠) des Zierbauteils (3) einen Winkelquerschnitt besitzt und daß ihr äußerer Flügel ein zylindrisches Innenprofil mit dem gleichen Krümmungsradius wie die innere Oberfläche des zylindrischen Teils der Klammer (1) besitzt.

5. Baueinheit nach Anspruch 3 oder 4, dadurch gekennzeichnet, daß der Schlitz (8-9) derart angeordnet ist, daß, wenn die Klaue (5a̠ oder 5b̠) in seinen engsten Teil (8) eingreift, ihre ebene Fläche sich in Befestigungspostion an dem Karosserieelement befindet.

6. Baueinheit nach einem der Ansprüche 1 bis 5, dadurch gekennzeichnet, daß die Mittel zur Befestigung der Klammer (1) an der Platte (2) durch einen inneren Vorsprung (11) gebildet werden, der eine Gewindebohrung (13) aufweist.

7. Baueinheit nach den Ansprüchen 3 und 6, dadurch gekennzeichnet, daß der zylindrische Teil der Klammer (1) symmetrisch von einer schiefen Ebene geschnitten wird, welche das Ende des Vorsprungs (11) freisetzt.


**Claims**

1. An embellishment piece (3), for example a strip, with a device for fixing same by means of one or more clips (1) on a bodywork element (2), such as a panel, characterized in that the embellishment piece (3) comprises at least one integrally moulded lug (5a or 5b), and in that the or each clip (1) comprises on the one hand a slit with two widths (8-9), the widest portion (9) permitting introduction of the lug in the clip and on the other hand means (11-13) for fixing it on the portion of the panel (2) hidden by the embellishment piece (3) in the position in which the lug is disposed in the narrowest portion (8) of the slit.

2. Assembly according to claim 1, characterized in that the embellishment piece comprises at least one pair of inner lugs (5a-5b) of right-angled section, the external wings (7) of these lugs being directed in an opposite direction so as to move away from each other and in that the widest portion (9) of the slit has a width at least equal to that of the pair of lugs whereas its narrowest portion (8) has a width substantially equal to the spacing between the internal wings (6) of the lugs.

3. Assembly according to claim 1 or 2, characterized in that the clip (1) has the shape of a cylinder cut through a plane parallel to the generatrices, the slit with two widths (8-9) being formed in the cylindrical portion of the clip and having its axis of symmetry disposed in a plane perpendicular to the generatrices of the cylinder.

4. Assembly according to claim 3 characterized in that the lug (5a or 5b) of the embellishment piece (3) has a right-angled section and in that its external wing has an internal cylindrical profile, with the same radius of curvature as the internal face of the cylindrical portion of the clip (1).

5. Assembly according to claim 3 or 4, characterized in that the slit (8–9) is disposed so that, when the lug (5a or 5b) is engaged in its narrowest portion (8), its flat face is in a fixed position on the bodywork element.

6. Assembly according to one of claims 1 to 5, characterized in that the means for fixing the clip (1) on the panel (2) are formed by an inner boss (11) comprising a tapped bore (13).

7. Assembly according to claims 3 and 6, characterized in that the cylindrical portion of the clip (1) is cut symmetrically through an oblique plane freeing the end of the boss (11).

EP 0 253 736 B1

# FIG.1

# FIG.3

# FIG.2

# FIG.4

# FIG. 5